# EUROPEAN PATENT APPLICATION

(11) **EP 1 528 174 A2**
(43) Date of publication of application: **04.05.2005**
(21) Application number: 04025878.2
(22) Date of filing: 02.11.2004
(51) Int. Cl.: E04B 9/00

(54) **Edging by means of the coating of panels for the construction of air conditioning ducting**

(30) Priority: 03.11.2003 ES 200302563
(71) Applicant: Saint-Gobain Cristaleria, S.A., 28046 Madrid (ES)
(72) Inventor: Juarranz Moratilla, Noe, Madrid (ES); Soriano Hoyuelos, Esther, Madrid (ES)
(74) Representative: Isern Jara, Nuria

(57) **Abstract**

The invention refers to an edging suitable for application to the edges of mineral wool panels, especially glass wool, of the type that is used in the manufacture of ducting for air conditioning, this coating being aimed at preventing the lifting off of the fibres from the panel by the rubbing action arising from its effect on this area of the panel from the air moving inside the inside. The edging is obtained by the direct application of a coating on the area that it is required to protect, consisting of paint, varnish or any other suitable substance, having fast drying properties and being applied by sprayers, rollers or similar devices.

## Description

### Aim of the Invention

This invention refers to an edging by means of the coating of panels for the construction of air conditioning ducting, this meaning, for the supply of mineral wool panels with rimmed edges, edged by means of any coating technique on one of its edges, which has the essential novelty characteristics and appreciable advantages compared to the known and used methods for the same purpose in the present state of the art.

More particularly, the invention proposes the development of mineral wool panels in preference , but not exclusively, to glass wool panels, of the type that is used for the manufacture of self supporting ducting for air conditioning distribution, in which one of the sides, which coincides behind the construction of the duct with the inner surface of same (the side in contact with the air that is being moved), this coating with a material or combination of coating materials which prevents the direct contact of the air with the fibres that make up the core of the panel and is finished off with the edging by means of a paint, varnish or similar technique to one of the longitudinal edges, thus extending the protected surface of the panel and therefore that of the constructed ducting.

The field of application of the invention is clearly within the industrial sector involved in the manufacture of components for air ducting installations, more specifically within the industry dedicated to the manufacture of air ducting applicable to the distribution of air in air conditioning and heating installations.

### Background and Summary of the Invention

The experts in the subject are well aware of the fact that the manufacture of self supporting ducting for the air conditioning distribution by means of mineral wool panels, and especially glass wool panels, is a widely extended and well used practice.

The Regulations of Thermal Installations in Buildings, in its ITE 04.4 include those made from metal sheet and glass wool as self supporting ducting for air distribution.

The mineral wool panels, generally glass wool, for the construction of ducting, are constructed from a core of mineral wool, made up from fibres of a glass origin agglomerated with thermosetting binders that are covered on both sides (not necessarily including the finishing off of the panel edges) .

In general, the surface of said panels that are going to remain behind the air ducting construction, towards the inner surface of same, is covered by an assembly called "complex" made up of a sheet of aluminium and Kraft paper joined to each other, it being possible to vary the arrangement or the composition or the order of the layers. There are also products on the market in which the inner surface is covered only by a sheet of aluminium or by a veil of glass, polyester or a combination of both, without any additional coating complex.

On the other hand, and as and how described in the Spanish Utility Model ES-1 030 237 U, in respect of "Improved agglomerate glass fibre sheet", the panels used in the construction of this type of ducting can have the longitudinal rims edged. This peculiarity, which has meant a massively accepted improvement to said panels, makes the operation of imbedding or assembly easier for the different sections of the ducting with those constructed and mechanically strengths the areas of the unions between said sections.

Additionally, the Spanish Utility Model ES-1 042 130 U, in respect of "Improved high density rigid glass wool panel", describes an additional improvement that allows the protection offered by the internal finish of the panels to be increased in the areas of the edging and, in particular, the longitudinal edge of the panels that, after the construction of the ducting, remains towards the inside of same and therefore more exposed to contact with the current of air being moved. In order to do this said invention proposes the use of an internal finish of the panels with a greater width than the panels themselves and of a series of shaping tools that allow this remaining width of the finish to be adapted to the stepped surface of the edged rim.

However, there are some cases where this technique is not applicable. This occurs, for example, when the finish of the inner side of the panels is fitted onto themselves before making the longitudinal cut to the desired width, in such a way that it is impossible to have this additional width of finish while protecting the rimmed area. This is the case of the panels that are covered finished on the inner side with a glass or polyester veil or a combination of both, a finish that is put at the entrance of the polymerisation oven for said panels and before its longitudinal cutting.

It can also occur even in those cases in which first the panels are cut and then finished it is not advantageous to apply the previously described edging technique, either because the nature of the finishing material makes the use of the shaping difficult for its adaptation to the rimmed edge, or because in the market there is no possibility for use of finishes with the additional width required for said operation or because the cost of said finishes is very significant and it would be too unviable to apply an increase to its width measurement to apply the rimming technique for shaping on the edge.

The invention here described proposes a new alternative for the finishing of these edges of the panel with the use of paint, varnish or similar coating techniques, which allow the edge that is most exposed to the air current being carried to be protected, for the purpose of avoiding it reaching the point of dragging fibres that can occasionally occur as a result of the rubbing effect of this, and that offers a solution that until now has not existed in those cases where finishing materials are used which are not viable for the application of the rimming technique by shaping the internal finish of the panels. Such is the case, as has already been said, of those veils that are fitted before the longitudinal cutting of the panels to the required width size and which constitute the aim of the preferred method for the embodiment of this invention. Additionally, an alternative rimming technique is proposed that is also applicable to those products in which the rimming technique by shaping can be used and for those where, in a large number of cases, this new edging technique by coating offers a more economical solution, as a result of the lower cost of the coating materials that correspond to the excess width of the finish required to apply the edging technique by shaping and/or of lower technical complexity than that corresponding to the design, use and adjustment of the rimming shapers.

### Brief Description of the Drawings

These and other characteristics and advantages of the invention can be more clearly seen from the detailed description that follows for the preferred method of the embodiment, given solely by way of an illustrative example and is not by way of limitation, in respect of the drawings that are accompanied, in which:
Figure 1 shows an example of a conventional edged panel of the type that is used in the construction of air conditioning ducting;
Figure 2 shows an example of a conventional panel similar to that of the previous figure, whose edge has been rimmed by shaping;
Figure 3 illustrates a cut or section, together with a detail in greater size, which has been made for the union between two sections of ducting made from conventional panels of the type described above, and
Figure 4 represents a panel made in accordance with the invention, and in which the improvements proposed by same have been incorporated.

### Description of a Form of the Preferred Embodiment

As and how explained above, the preferred embodiment of the present invention refers to those cases in which the interior finish of the panels is applied prior to the longitudinal cutting of same compared to the dimension of the required width and the use of an additional finish width is not therefore viable in order to apply the rimming technique by shaping. Such is the case of finishes of the glass veil type, which is incorporated into panels in the initial phases of the manufacturing process of same and long before the longitudinal cutting of the panel to the required width.

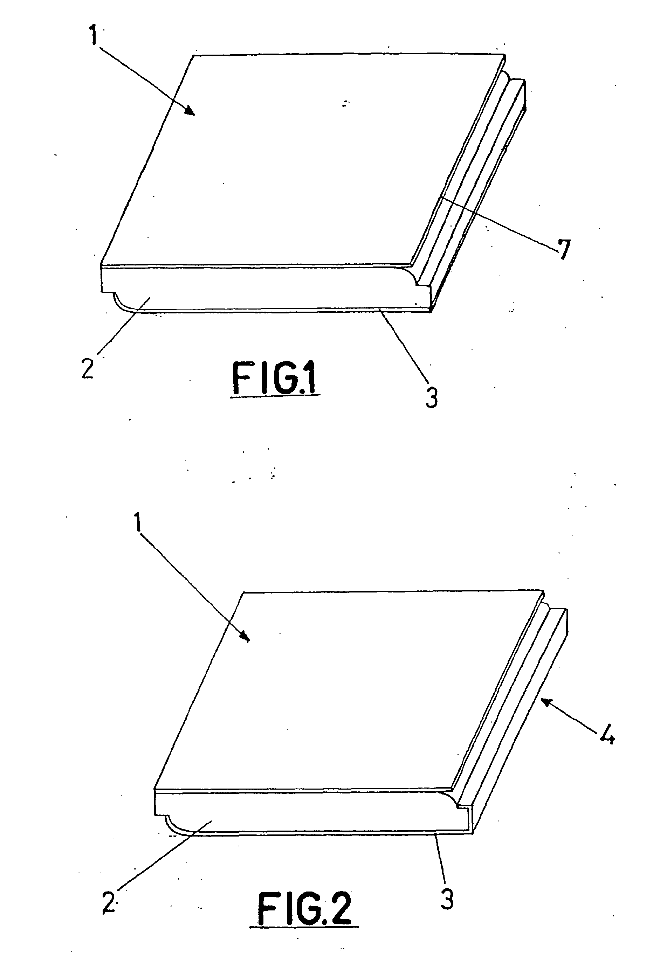

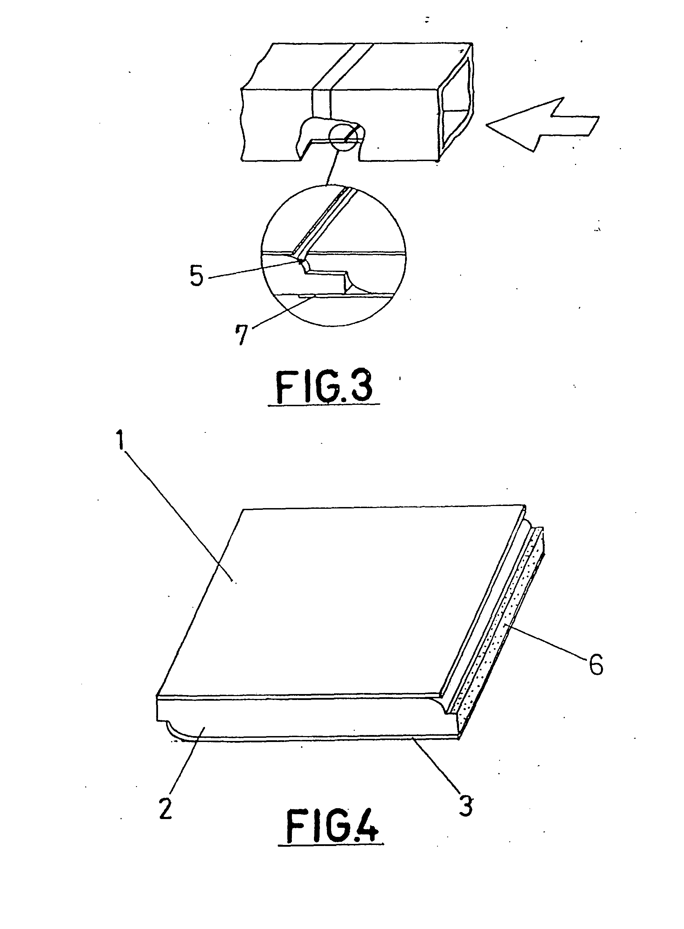

The characteristics of the conventional panels can be appreciated in Figures 1 to 3 which were commented on above. Hence, the panel in Figure 1 is of the type which is made up of a core of glass wool (2) with a covering to the outside of a material or combination finish (1) and on the inside by a material or a combination finish (3), without any edging on any of the edges, whilst in the case of Figure 2 shows a panel being of the type which has its edge with an edging (4) duly edged thanks to the application onto same of a portion of the lower finish (3), as the width of this is greater than that of the panel itself, and as this overhanging portion folded over said edge with the use of shaping devices that act on the step forming the edge, until obtaining the finish required for same. In regards to Figure 3, it can be seen that there is a section in the area to be found between the two sections of the ducting carried out with the conventional panels of the previously commented type, and which shows the manner in which such conducts are constructed. The detail in greater size that incorporates this Figure shows the complementary nature offered by the respective ends of both sections of the ducting, and the internal and external finish to the union, in such a way that the rimming of the edge that remains in the inner part (5) allows same to be protected from direct contact with the air current being carried through the ducting, whilst said union is protected on the outside by the application of a portion of the integral overlap (7) with the external finish (1) of the panel.

In contrast to the previous, the invention proposes, in its preferred embodiment, the use of coating techniques such as painting, varnishing or similar, in order to protect the finished edge of the panels and to therefore extend the protection of the interior finish of same to an area which at present is exposed to rubbing by the current of air being moved and therefore giving the likelihood to the lifting off of some of the fibres that make up said area of the body of the panels. The representation shows a panel whose general characteristics are the same as in any known panel, but in which the novelty of the invention has already been incorporated, with the covering of the covered edge with a paint, varnish or similar having the appropriate characteristics, this edge being shown in general with the reference (6), and in addition dotted (or shaded) in order to show the area of cover more clearly.

In order to apply said coating, the use is proposed of paint, varnish or similar sprays are proposed, in order for such devices to be suitable to protect this area of the panel corresponding to the finished edge. The substance projected, after having dried, provides a capacity of coverage so as to fix or increase the adhesion of the fibres to the body of the panel in the areas (6) of the finished edge in such a way as to eliminate the dragging by rubbing or friction by the current of air being moved.

In the preferred embodiment, this substance for the covering basically consists of plastic types of paints, with a high pigment load and an organic solvent base which allows for fast drying, although the use of other types of paints is not dismissed such as, for example, those with a water base, whenever they will allow the edge being treated to be sufficiently covered with a single coat. Thus the integral protection is achieved for the surface of the innermost parts of the panel which is more exposed to said friction.

As an alternative, another form of the preferred embodiment envisages the use of rollers for paint, varnish or similar products, adapted to allow for their application on the rimmed edge of the panels which it is required to protect.

In accordance with that which has been stated above, this technique is applicable in all of those cases in which the internal coating is made on panels subsequent to their longitudinal cutting to the size of the required width, as occurs, for example, with the finishes made up from sheets of Aluminium or Kraft paper and aluminium sheet combinations which at the present time are valid for the application of the technique of edging by shaping, but for those this new technique offers a cheaper and/or less complex alternative.

It has not been considered necessary to make the content of the description longer as experts in the field are able to understand its scope and the advantages derived from the invention, likewise to develop and put into practice the object of same.

However, it must be understood that the invention has been described in accordance with a preferred embodiment of same, thus it is possible to make modifications without this meaning any alteration to the basis of same, without such modifications being able to affect, in particular, the manner, the size and/or the materials used for the manufacture of the panels, or where appropriate, the type of coating applicators onto the rimmed edge of same.

## Claims

1. Edging by means of panel coating for the construction of air conditioning ducting, particularly mineral wool panels fitted with coatings on both sides for their subsequent use in the manufacture of air ducting, especially for air conditioning, such panels being made of a central core (2) of mineral wool, especially glass wool, covered on both external and internal surfaces with respective combinations (1, 3), whose longitudinal edges are edged, **characterised in that** the longitudinal edge after the formation of the air conditioning ducting is located on the inner part of same, is fitted with a coating (6) made from a protective product, applied in direct and close contact with the fibres that make up the core of the panel, by means of which the integrity of same is guaranteed, preventing the action of rubbing or friction of the air circulating in this area of the panel being able to cause the lifting of the fibres from the panel.

2. Edging by means of panel coating in accordance with Claim 1, **characterised in that** the stated protective coating (6) is obtained by the direct application of a paint, varnish or product having similar properties on the area of the edge where it is required to give protection.

3. Edging by means of panel coating in accordance with Claims 1 and 2, **characterised in that** the constitutive paint of the stated coating (6) applied to the edge of the panel (2) is chosen from the plastic types of paint, with a high pigment load and an organic solvent base, which allows fast drying, and **in that** the application of the coating is carried out by means of spraying, rollers or another type of applicator.
